# EUROPEAN PATENT SPECIFICATION

(11) **EP 3 890 364 B1**
(45) Date of publication and mention of the grant of the patent: **04.03.2026**
(21) Application number: 20315092.5
(22) Date of filing: 31.03.2020
(51) Int. Cl.: H04W 12/50, H04W 12/77, H04W 4/021, H04W 4/80, H04M 1/725, G06Q 20/18, G06Q 30/016, G06Q 20/32, H04L 67/025, G08C 17/02

(54) **METHOD FOR REMOTELY ACCESSING A SERVICE LOCALLY PROVIDED BY A CUSTOMER SERVICE DEVICE VIA A TOUCH MAN-MACHINE INTERFACE**
VERFAHREN ZUM FERNZUGRIFF AUF EINEN VON EINEM KUNDENDIENSTGERÄT LOKAL BEREITGESTELLTEN DIENST ÜBER EINE MENSCH-MASCHINE-BERÜHRUNGSSCHNITTSTELLE
PROCÉDÉ POUR ACCÉDER À DISTANCE À UN SERVICE FOURNI LOCALEMENT PAR UN DISPOSITIF DE SERVICE CLIENT VIA UNE INTERFACE HOMME-MACHINE TACTILE

(43) Date of publication of application: 06.10.2021
(73) Proprietor: BULL SAS, 78340 Les Clayes-Sous-Bois (FR)
(72) Inventor: SMYTH, David, Daigety Bay Fife KY11 9YH (GB)
(74) Representative: Novagraaf Technologies

(56) References cited:
- WO-A1-2015/162550
- US-A1- 2013 131 971
- US-A1- 2018 288 594

## Description

### TECHNICAL FIELD

The technical field of the invention is the one of devices equipped with a touch man-machine interface and more particularly the one of customer service devices equipped with a touch man-machine interface.

The present invention relates to a method for remotely accessing a service provided by a customer service device comprising a touch man-machine interface, and to a terminal, a system and a computer program product enabling such a method to be implemented.

### BACKGROUND OF THE INVENTION

In recent years, there is a huge growth in devices equipped with touch man-machine interfaces for consumer input. These touch man-machine interfaces, as for example touch screens or touch keypads, are used for example in digital drinks dispensers to order a drink, in fast-foods to order a meal, in planes for infotainment, or again in public areas for customer satisfaction or customer information.

A customer service device equipped with a touch man-machine interface is therefore intended to be used by many customers, which raises hygiene issues since the customers do not necessarily have any opportunity to sanitize their hands before and after using the man-machine interface. A solution would be to put in place hand gel dispensers to cleanse before and after use, but these require maintenance and refilling and these dispensers could be vandalized or stolen.

Moreover, the customer services devices are located in public areas, which raises security issues. Actually, the customer services devices can be cloned, replaced in situ, or abused, for example customer satisfaction devices can be abused by selecting the high or low rating multiple times.

There is therefore a need for a customer to securely access a service locally provided by a customer service device via its touch man-machine interface, without endangering his health.

Document US 2018/288594 entitled "Dispenser Connectivity" is known from the prior art.

### SUMMARY OF THE INVENTION

An object of the invention is to provide a secure and healthy access to a service traditionally accessible via the touch man-machine interface of a customer service device. To this end, according to a first aspect of the invention, it is provided a method for a user having a terminal, to remotely access at least one service provided by a customer service device comprising a touch man-machine interface and being associated with a service provider, the service being locally accessible via the touch man-machine interface, a mirroring application having a list of authorized service providers approved by a trustworthy entity being installed on the terminal, the method comprising the following steps:
- Verifying if a first condition is met, the first condition being met if the service provider associated with the customer service device is listed in the list of authorized service providers;
   o If the first condition is met:
      - Initiation by the terminal, of a pairing with the customer service device;
      - Once the terminal and the customer service device are paired, accessing the service on the terminal via the mirroring application being configured to make the interface between the terminal and the customer service device.

Thanks to the invention, the user can access the service provided by the customer service device via the man-machine interface, for example the screen or the keypad, of his own terminal, that is without touching the touch man-machine interface of the customer service device, which is healthier. The access is more secure since the terminal is only allowed to pair with a customer service device associated with a service provider in a list of defined and approved service providers. It is also possible to impose a short period of pairing to avoid any abuse.

Apart from the characteristics mentioned above in the previous paragraph, the method according to a first aspect of the invention may have one or several complementary characteristics among the following characteristics considered individually or in any technically possible combinations.

According to a variant of the invention, the step of verification is performed by the terminal.

The step of verification is thus automatically performed without any user intervention.

According to a variant of the invention compatible with the previous variant, the terminal comprises a screen and the list of authorized service providers is displayed on the screen of the terminal.

The step of verification can thus be performed by the user.

According to a variant of the invention compatible with the previous variants, each authorized service provider is associated with information in the list of authorized service providers, the information being selected among the following list of information: a list of customer service devices associated with the service provider, a location or a reference of each customer service devices associated with the service provider, customer trust rating for the service provider.

The user has thus information to decide whether or not he can trust the service provider and connect to the customer service device. It is especially relevant for ticketing or financial services.

According to a first embodiment of the invention compatible with the previous variants, a QR code is disposed on the customer service device and the step of initiation is realized by scanning the QR code via the terminal.

It is thus possible to establish a peer-to-peer connection between the terminal and the customer service device, or to get information necessary to establish a connection, for example a Bluetooth or a WiFi connection.

According to a second embodiment of the invention compatible with the previous variants and first embodiment, the step of initiation is realized by Bluetooth.

With the first and the second embodiment, the user does not need any internet connection and has to be close to the customer service device, which reinforces security.

According to a third embodiment of the invention compatible with the previous variants and first embodiment, the step of initiation is realized by WiFi.

According to a variant of the invention compatible with the previous variants and embodiments, the mirroring application is configured to mirror the touch man-machine interface on the terminal.

The user has thus access to the same services via his terminal than the one provided by the customer service device.

According to a variant of the invention compatible with the previous variants and embodiments, the mirroring application is compatible with each authorized service provider of the list of authorized service providers.

Consequently, only one application is necessary to connect to customer service devices associated to different service providers. Actually, it is not required to subscribe to a specific application relative to the service that the user is attempting to interact with since the mirroring application has the ability for any new service to treat the user as a new customer in the same way as the user would, by interacting with the customer service device directly but without having to subscribe and load any new applications. Moreover, through the mirroring application, each service provider can customize the services offered to the user.

According to a variant of the invention compatible with the previous variants and embodiments, the method according to the first aspect of the invention comprises a step of exchange of information between the terminal and the mirroring application.

It is thus possible for a service provider to get information about the user. For example, localization information could be used by the service provider to test the reception of a given service in a given local market and get instant direct feedback from the user.

According to a second aspect of the invention, it is provided a terminal comprising means for implementing the method according to the first aspect of the invention.

According to a third aspect of the invention, it is provided a system comprising a terminal according to the second aspect of the invention and a customer service device comprising a touch man-machine interface, the customer service device being configured to locally give access to at least one service via the touch man-machine interface and being able to pair with a terminal.

According to a variant of the invention, the customer service provider has a QR code.

According to a variant of the invention compatible with the previous variant, the touch man-machine interface is a touch screen, a keypad, a keyboard, one or several buttons, a thumbwheel, a joystick, and/or a remote control.

According to a fourth aspect of the invention, it is provided a computer program product comprising instructions which, when the program is executed by a computer, cause the computer to carry out the steps of the method according to the first aspect of the invention.

The invention and its various applications will be better understood by reading the following description and examining the accompanying figures.

### BRIEF DESCRIPTION OF THE FIGURES

The figures are presented for information purposes only and in no way limit the invention.
- Figure 1 is a flow chart of the method of the invention.
- Figure 2 schematically represents the second step of the method according to the invention.
- Figure 3 schematically represents the third step of the method according to the invention.

### DETAILED DESCRIPTION OF THE PREFERRED EMBODIMENT

Some embodiments of devices and methods in accordance with embodiments of the present invention are now described, by way of example only, and with reference to the accompanying drawings. The description is to be regarded as illustrative in nature and not as restrictive.

A first aspect of the invention relates to a method for remotely accessing at least one service provided by a customer service device comprising a touch man-machine interface.

Traditionally, the service is locally provided by the customer service device via the touch man-machine interface, that is that a user has to interact with the touch man-machine interface to be provided with the service. The access to the service is therefore local since the user has to be in contact with the touch man-machine interface.

The touch man-machine interface is for example a touch screen, a keypad, a keyboard, one or several buttons, a thumbwheel, a joystick, or again a remote control.

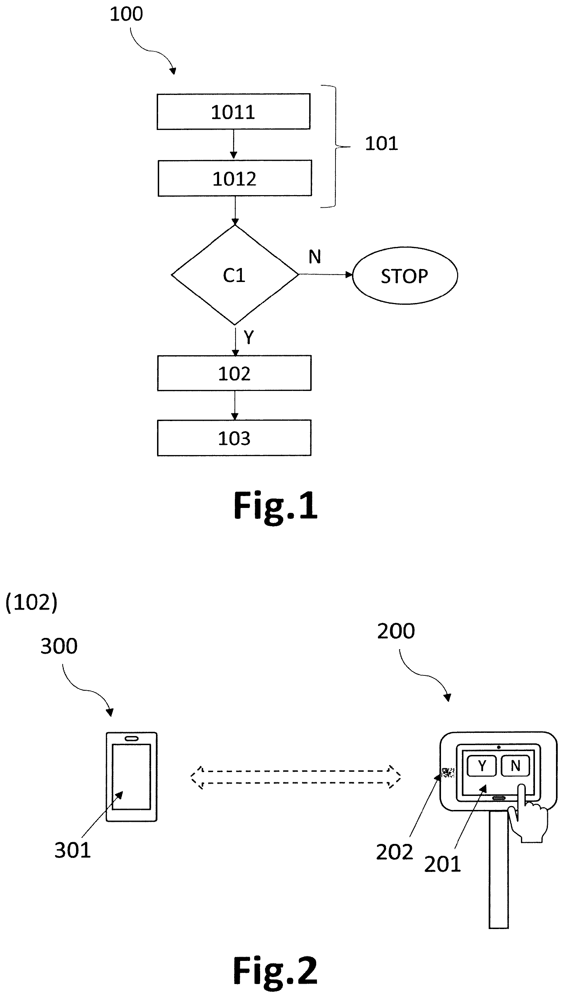

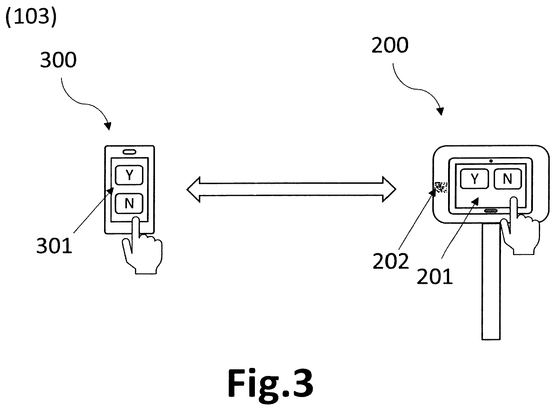

The customer service device is for example a digital drinks dispenser providing a drink ordered via a keyboard, an airplane seat having a screen providing series and films ordered via a remote control during medium and long flights, or as illustrated in figures 2 and 3, the customer service device 200 is a customer satisfaction terminal providing customers opinions about a given public place, the customers giving their opinion via a touch screen 201.

The customer service device 200 is associated with a service provider. For example, a digital drinks dispenser is associated with a drinks industry company, an airplane seat is associated with an airline company and a customer satisfaction terminal is associated with a company managing the public place on which people give their opinion.

The customer service device 200 must be able to establish at least one type of connection with a terminal, for example a WiFi connection and/or a Bluetooth connection and/or a peer-to-peer connection, that is to pair with a terminal.

A second aspect of the invention relates to a terminal for implementing the method of the invention.

For a user willing to remotely access one service provided by the customer service device 200, the terminal is a terminal belonging to the user.

The terminal is for example a laptop, a tablet or, as illustrated in figures 2 and 3, the terminal 300 is a smartphone. Broadly speaking, the terminal 300 is a device comprising at least a screen 301, a processor and a human-machine interface, for example a touch screen and/or a keyboard and/or a mouse.

The screen 301 and the human-machine interface can be one and the same device.

A mirroring application is installed on the terminal 300. The mirroring application has a list of authorized service providers, that is of service providers who were approved by a trustworthy entity, for example a regulatory authority.

In the list of authorized service providers, each authorized service provider is for example associated with some information. The information is for example a list of customer service devices 200 associated with the service provider, and/or the location and/or the reference of each customer service devices 200 associated with the service provider, and/or a customer trust rating for the service provider.

The mirroring application is universal, that is the mirroring application is compatible with each authorized service provider of the list of authorized service providers.

The user via the terminal 300 can exchange information with the mirroring application, for example settings, as for example language preferences, credentials, as for example a password and/or a fingerprint, or again localization information.

As illustrated in figure 1, the method 100 of the invention comprises a first step 101 consisting in verifying if a first condition C1 is met.

The first condition C1 is met if the service provider associated with the customer service device 200 is listed in the list of authorized service providers in possession of the mirroring application.

In a first alternative of the invention, the first step 101 of the method 100 is performed by the terminal 300.

In a second alternative of the invention, the first step 101 of the method 100 is performed by the user.

For example, the first step 101 comprises a first sub-step 1011 consisting in obtaining the service provider associated with the customer service device 200.

In the first alternative, the service provider associated with the customer service device 200 is obtained by the terminal 300.

For example, the terminal 300 is configured to scan QR codes and the service provider associated with the customer service device 200 is obtained by scanning a QR code disposed on the customer service device 200, or the terminal 300 comprises geolocation means and the service provider associated with the customer service device 200 is obtained by geolocating the terminal 300 and comparing the location of the terminal 300 with the locations of customer service devices 200 associated with authorized services providers comprised in the list of authorized services providers, or the user enters the service provider associated with the customer service device 200 in the terminal 300 via the human-machine interface.

In the second alternative, the service provider associated with the customer service device 200 is obtained by the user.

The service provider associated with the customer service device 200 is for example obtained by reading an indication written on the customer service device 200.

The first step 101 then comprises a second sub-step 1012 consisting in comparing the service provider obtained at the first sub-step 1011 with the list of authorized services providers in possession of the mirroring application.

In the first alternative, the second sub-step 1012 is automatically performed by the terminal 300 via the mirroring application since the terminal 300 knows the service provider associated with the customer service device 200 from the first sub-step 1011 and the list of authorized service providers from the mirroring application.

II the second alternative, the second sub-step is performed by the user.

In the second alternative, the mirroring application displays the list of authorized service providers on the screen 301 of the terminal 300 and the comparison is performed by the user who knows the service provider associated with the customer service device 200 from the first sub-step 1011.

If the first condition C1 is met, a second step 102 and a third step 103 of the method 100 of the invention is performed.

The second step 102 consists in initiating a pairing between the terminal 300 and the customer service device 200. The second step 102 is performed by the terminal 300.

According to a first embodiment of the invention illustrated in figure 2, a QR code 202 is disposed on the customer service device 200 and the terminal 300 is configured to scan QR codes, for example via the mirroring application.

The second step 102 is realized by scanning the QR code to enable a peer-to-peer connection to be established between the terminal 300 and the customer service device 200.

In figure 2, the customer service device 200 is a customer satisfaction terminal enabling a user to give its opinion by touching the option yes Y or the option no N on the touch screen 201 of the customer service device 200.

In figure 2, the terminal 300 is pairing with the customer service device 200 which is represented by a dotted arrow. The pairing is realized by scanning a QR code 202 disposed on the customer service device 200.

According to a second embodiment non illustrated in the figures, the second step 102 is realized by establishing a Bluetooth connection between the terminal 300 and the customer service device 200.

According to a third embodiment non illustrated in the figures, the second step 102 is realized by establishing a WiFi connection between the terminal 300 and the customer service device 200 via a WiFi network.

According to a fourth embodiment non illustrated in the figures, the second step 102 is realized by scanning a QR code 202 to obtain information enabling a connection, for example a Bluetooth or a WiFi connection, to be established between the terminal 300 and the customer service device 200.

Once the terminal 300 and the customer service device 200 are paired, the third step 103 consists in accessing the service provided by the customer service device 200 on the terminal 300 via the mirroring application being configured to make the interface between the terminal 300 and the customer service device 200. For example, the mirroring application manages the human-machine interface of the terminal 300, for example by displaying a keyboard or allowing touchscreen, and/or defines how the user can navigate, what operations are allowed.

For example and as illustrated in figure 3, the mirroring application is configured to mirror the touch screen 201 of the customer service device 200 on the screen 301 of the terminal 300.

In figure 3, the screen 301 of the terminal 300 displays the same option yes Y and option no N that the one displayed on the touch screen 201 of the customer service device 200.

The mirroring application can also be configured to propose user-defined services.

## Claims

1. Method (100) for a user having a terminal (300), to remotely access at least one service provided by a customer service device (200) comprising a touch man-machine interface (201) and being associated with a service provider, the service being locally accessible via the touch man-machine interface (201), a mirroring application having a list of authorized service providers approved by a trustworthy entity being installed on the terminal (300), the method (100) comprising the following steps:
- Verifying if a first condition (C1) is met (101), the first condition (C1) being met if the service provider associated with the customer service device (200) is listed in the list of authorized service providers;
_{∘} If the first condition (C1) is met:
• Initiation by the terminal (300), of a pairing with the customer service device (200, 102);
• Once the terminal (300) and the customer service device (200) are paired, accessing the service on the terminal (300) via the mirroring application being configured to make the interface between the terminal (300) and the customer service device (200, 103).

2. Method (100) according to claim 1, **characterized in that** the terminal (300) comprises a screen (301) and the list of authorized service providers is displayed on the screen (301) of the terminal (300).

3. Method (100) according to any of the preceding claims, **characterized in that** each authorized service provider is associated with information in the list of authorized service providers, the information being selected among the following list of information: a list of customer service devices (200) associated with the service provider, a location or a reference of each customer service devices (200) associated with the service provider, customer trust rating for the service provider.

4. Method (100) according to any of the preceding claims, **characterized in that** a QR code (202) is disposed on the customer service device (200) and the step (102) of initiation is realized by scanning the QR code (202) via the terminal (300).

5. Method (100) according to any of claims 1 to 4, **characterized in that** the step (102) of initiation is realized by Bluetooth or Wifi.

6. Method (100) according to any of the preceding claims, **characterized in that** the mirroring application is compatible with each authorized service provider of the list of authorized service providers.

7. Method (100) according to any of the preceding claims, **characterized in that** it comprises a step of exchange of information between the terminal (300) and the mirroring application.

8. Terminal (300) comprising means for implementing the method (100) according to any of the preceding claims.

9. System comprising the terminal (300) according to claim 8 and a customer service device (200) comprising a touch man-machine interface (201), the customer service device (200) being configured to locally give access to at least one service via the touch man-machine interface (201) and being able to pair with the terminal (300).

10. A computer program product comprising instructions which, when the program is executed by a computer, cause the computer to carry out the steps of the method according to any of claims 1 to 7.

## Patentansprüche

1. Verfahren (100) für einen Benutzer, der über ein Endgerät (300) verfügt, um auf mindestens einen Dienst aus der Ferne zuzugreifen, der durch eine Kundendienstvorrichtung (200), die eine berührungsempfindliche Mensch-Maschine-Schnittstelle (201) umfasst und einem Dienstanbieter zugeordnet ist, bereitgestellt wird, wobei auf den Dienst über die berührungsempfindliche Mensch-Maschine-Schnittstelle (201) lokal zugegriffen werden kann, wobei eine Spiegelungsanwendung, die über eine Liste autorisierter Dienstanbieter verfügt, die durch eine vertrauenswürdige Entität genehmigt sind, auf dem Endgerät (300) installiert ist, das Verfahren (100) umfassend die folgenden Schritte:
- Überprüfen, ob eine erste Bedingung (C1) erfüllt (101) ist, wobei die erste Bedingung (C1) erfüllt ist, falls der Dienstanbieter, der der Kundendienstvorrichtung (200) zugeordnet ist, in der Liste autorisierter Dienstanbieter aufgelistet ist;
o falls die erste Bedingung (C1) erfüllt ist:
• Initiieren, durch das Endgerät (300), einer Kopplung mit der Kundendienstvorrichtung (200, 102);
• sobald das Endgerät (300) und die Kundendienstvorrichtung (200) gekoppelt sind, Zugreifen auf den Dienst auf dem Endgerät (300) über die Spiegelungsanwendung, die konfiguriert ist, um die Schnittstelle zwischen dem Endgerät (300) und der Kundendienstvorrichtung (200, 103) herzustellen.

2. Verfahren (100) nach Anspruch 1, **dadurch gekennzeichnet, dass** das Endgerät (300) einen Bildschirm (301) umfasst und die Liste autorisierter Dienstanbieter auf dem Bildschirm (301) des Endgeräts (300) angezeigt wird.

3. Verfahren (100) nach einem der vorstehenden Ansprüche,
**dadurch gekennzeichnet, dass** jeder autorisierte Dienstanbieter Informationen in der Liste der autorisierten Dienstanbieter zugeordnet ist, wobei die Informationen aus der folgenden Liste von Informationen ausgewählt sind: einer Liste von Kundendienstvorrichtungen (200), die dem Dienstanbieter zugeordnet sind, einem Standort oder einer Referenz jeder Kundendienstvorrichtung (200), die dem Dienstanbieter zugeordnet ist, einer Kundenvertrauensbewertung für den Dienstanbieter.

4. Verfahren (100) nach einem der vorstehenden Ansprüche,
**dadurch gekennzeichnet, dass** ein QR-Code (202) auf der Kundendienstvorrichtung (200) eingerichtet ist und der Schritt (102) des Initiierens durch Scannen des QR-Codes (202) über das Endgerät (300) umgesetzt wird.

5. Verfahren (100) nach einem der Ansprüche 1 bis 4,
**dadurch gekennzeichnet, dass** der Schritt (102) des Initiierens durch Bluetooth oder Wi-Fi umgesetzt wird.

6. Verfahren (100) nach einem der vorstehenden Ansprüche,
**dadurch gekennzeichnet, dass** die Spiegelungsanwendung mit jedem autorisierten Dienstanbieter der Liste autorisierter Dienstanbieter kompatibel ist.

7. Verfahren (100) nach einem der vorstehenden Ansprüche,
**dadurch gekennzeichnet, dass** es einen Schritt eines Austauschens von Informationen zwischen dem Endgerät (300) und der Spiegelungsanwendung umfasst.

8. Endgerät (300), umfassend Mittel zum Implementieren des Verfahrens (100) nach einem der vorstehenden Ansprüche.

9. System, umfassend das Endgerät (300) nach Anspruch 8 und eine Kundendienstvorrichtung (200), umfassend eine berührungsempfindliche Mensch-Maschine-Schnittstelle (201), wobei die Kundendienstvorrichtung (200) konfiguriert ist, um einen Zugriff auf mindestens einen Kundendienst über die berührungsempfindliche Mensch-Maschine-Schnittstelle (201) lokal zu gewähren, und in der Lage ist, sich mit dem Endgerät (300) zu koppeln.

10. Computerprogrammprodukt, umfassend Anweisungen, die, wenn das Programm durch einen Computer ausgeführt wird, den Computer veranlassen, die Schritte des Verfahrens nach einem der Ansprüche 1 bis 7 durchzuführen.

## Revendications

1. Procédé (100) permettant, à un utilisateur disposant d'un terminal (300), d'accéder à distance à au moins un service fourni par un dispositif de service client (200) comprenant une interface homme-machine tactile (201) et étant associé à un fournisseur de services, le service étant accessible localement par l'intermédiaire de l'interface homme-machine tactile (201), une application miroir ayant une liste de fournisseurs de service autorisés approuvée par une entité de confiance étant installé sur le terminal (300), le procédé (100) comprenant les étapes suivantes :
- la vérification du fait qu'une première condition (C1) est remplie (101), la première condition (C1) étant remplie si le fournisseur de services associé au dispositif de service client (200) figure dans la liste des fournisseurs de service autorisés ;
_{∘} Si la première condition (C1) est remplie :
• Le lancement, par le terminal (300), d'un appariement avec le dispositif de service client (200, 102) ;
• Une fois que le terminal (300) et le dispositif de service client (200) sont appariés, l'accès au service sur le terminal (300) par l'intermédiaire de l'application miroir étant configurée pour établir l'interface entre le terminal (300) et le dispositif de service client (200, 103).

2. Procédé (100) selon la revendication 1, **caractérisé en ce que** le terminal (300) comprend un écran (301) et la liste des fournisseurs de service autorisés est affichée sur l'écran (301) du terminal (300).

3. Procédé (100) selon l'une quelconque des revendications précédentes, **caractérisé en ce que** chaque fournisseur de services autorisé est associé à des informations dans la liste de fournisseurs de services autorisés, les informations étant sélectionnées parmi la liste d'informations suivante : une liste de dispositifs de service client (200) associés au fournisseur de services, un emplacement ou une référence de chaque dispositif de service à la clientèle (200) associé au fournisseur de services, l'évaluation de la confiance des clients à l'égard du fournisseur de services.

4. Procédé (100) selon l'une quelconque des revendications précédentes, **caractérisé en ce qu'**un code QR (202) est disposé sur le dispositif de service client (200) et l'étape (102) de lancement est réalisée en balayant le code QR (202) par l'intermédiaire du terminal (300).

5. Procédé (100) selon l'une quelconque des revendications 1 à 4, **caractérisé en ce que** l'étape (102) de lancement est réalisée par Bluetooth ou Wifi.

6. Procédé (100) selon l'une quelconque des revendications précédentes, **caractérisé en ce que** l'application miroir est compatible avec chaque fournisseur de services autorisé de la liste des fournisseurs de service autorisés.

7. Procédé (100) selon l'une quelconque des revendications précédentes, **caractérisé en ce qu'**il comprend une étape d'échange d'informations entre le terminal (300) et l'application miroir.

8. Terminal (300) comprenant un moyen pour mettre en œuvre le procédé (100) selon l'une quelconque des revendications précédentes.

9. Système comprenant le terminal (300) selon la revendication 8 et un dispositif de service client (200) comprenant une interface homme-machine tactile (201), le dispositif de service client (200) étant configuré pour donner localement un accès à au moins un service par l'intermédiaire de l'interface homme-machine tactile (201) et pouvant être apparié avec le terminal (300).

10. Produit-programme informatique comprenant des instructions qui, lorsque le programme est exécuté par un ordinateur, amènent l'ordinateur à exécuter les étapes du procédé selon l'une quelconque des revendications 1 à 7.
